# EUROPÄISCHE PATENTANMELDUNG

(11) **EP 1 327 516 A1**
(43) Veröffentlichungstag der Anmeldung: **16.07.2003**
(21) Anmeldenummer: 03000397.4
(22) Anmeldetag: 10.01.2003
(51) Int. Cl.: B32B 15/08, B32B 27/00

(54) **Folie für Lebensmittelverpackungen**

(30) Priorität: 12.01.2002 DE 10200925
(71) Anmelder: Hydro Aluminium Deutschland GmbH, 53117 Bonn (DE)
(72) Erfinder: Schubert, Günter, Dr., 53359 Rheinbach (DE); Boiron, Guy, 68920 Wintzenheim (FR)
(74) Vertreter: Cohausz & Florack

(57) **Zusammenfassung**

Die Erfindung betrifft eine Folie für Lebensmittelverpackungen mit mindestens einer Schicht 1 aus einem Aluminiumwerkstoff. Eine derartige Folie wird insbesondere im Hinblick auf ihre Durchstoßfestigkeit dadurch verbessert, dass die Folie mindestens eine extrudierte Schicht 2 aus einem reißfesten Polymer aufweist.

**Zur Veröffentlichung mit der Zusammenfassung wird die einzige Figur vorgeschlagen.**

## Beschreibung

Die Erfindung betrifft eine Folie, insbesondere für Lebensmittelverpackungen, mit mindestens einer Schicht aus einem Aluminiumwerkstoff.

Derartige Folien sind in einer Vielzahl von Ausgestaltungen bekannt. Zu nennen sind hier im wesentlichen dünne Aluminiumfolien mit einer Dicke von etwa 5-60 µm und Kunststoffverbunde mit einer Dicke von etwa 10-100 µm mit aufgedampfter Aluminiumschicht.

Bei dünnen Aluminiumfolien ist die vergleichsweise geringe Durchstoßfestigkeit im Hinblick auf die Haltbarkeit von verpackten Lebensmittel und die mechanische Widerstandsfähigkeit der Folie problematisch. Von Vorteil ist die Tatsache, dass Aluminiumfolien leicht prägbar sind, wodurch eine Anhaftung von aufeinanderliegenden Folien vermieden wird, was bei der Weiterverarbeitung von vorkonfektionierten Folien von Vorteil ist.

Bei Kunststoffverbunden ist problematisch, dass diese wegen des Rückstellvermögens der verwendeten Kunststofffilme schlecht prägbar sind und darüber hinaus die Barrierewirkung beim Prägen leidet. Auch weisen Kunststoffverbunde eine gewisse Rollneigung auf, die ebenso wie die mangelnde Prägbarkeit die Weiterverarbeitung vorkonfektionierter Folienabschnitte deutlich erschwert. Allerdings weisen Kunststoffverbunde eine im Vergleich zu dünnen Aluminiumfolien verbesserte Durchstoßfestigkeit auf.

Ausgehend von dem zuvor beschriebenen Stand der Technik liegt der vorliegenden Erfindung die Aufgabe zugrunde, eine Folie für Lebensmittelverpackungen zur Verfügung zu stellen, die eine sehr gute Durchstoßfestigkeit bei gleichzeitig einfacher Weiterverarbeitbarkeit von vorkonfektionierten Folienabschnitten gewährleistet.

Erfindungsgemäß ist die zuvor hergeleitete und aufgezeigte Aufgabe dadurch gelöst, dass die Folie mindestens eine extrudierte Schicht aus einem reißfesten Polymer aufweist. Durch die vergleichsweise geringe Steifigkeit von extrudierten Schichten aus einem reißfesten Polymer bleibt die Prägbarkeit der Schicht aus einem Aluminiumwerkstoff erhalten. Die Reißfestigkeit der erfindungsgemäßen Folie ist gegenüber der von Kunststoffverbunden dadurch weiter verbessert, dass eine extrudierte Schicht aus einem reißfesten Polymer eine deutlich verbesserte Reißfestigkeit gegenüber den üblicherweise bei Kunststoffverbunden verwendeten Kunststofffilmen aus biaxial gereckten Polymeren wie Polyester, Polyamid oder Polypropylen aufweist. Es wird nicht nur die Durchstoßfestigkeit sondern auch die Einreiß- und Weiterreißfestigkeit gegenüber den bekannten Folien für Lebensmittelverpackungen verbessert. Darüber hinaus wird auch die Widerstandsfähigkeit gegen Knickbruch im Vergleich zu dünnen Aluminiumfolien deutlich verbessert. Gleichzeitig bleibt der häufig gewünschte optische Eindruck einer dünnen Aluminiumfolie erhalten.

Dadurch, dass gemäß einer ersten Ausgestaltung die Schicht aus einem Aluminiumwerkstoff als Aluminiumfolie ausgebildet ist, ist die Prägbarkeit der erfindungsgemäßen Folie und damit eine bessere Weiterverarbeitbarkeit von vorkonfektionierten Folienabschnitten gewährleistet.

Außerdem lässt sich die Dicke der Aluminiumfolie deutlich reduzieren und somit das erfindungsgemäße Folienmaterial kostengünstig produzieren.

Ist die Schicht aus einem Aluminiumwerkstoff alternativ als auf eine Kunststofffolie aufgedampfte Aluminiumschicht ausgebildet, so wird hierdurch die Einreiß- und Weiterreißfestigkeit einer derartigen Folie wesentlich verbessert.

Eine Vereinfachung bei der Herstellung einer erfindungsgemäßen Folie für Lebensmittelverpackungen ist dadurch gewährleistet, dass eine mit der Schicht aus reißfestem Polymer coextrudierte siegelfähige Schicht vorgesehen ist. Durch die Coextrusion der siegelfähigen Schicht gemeinsam mit der Schicht aus reißfestem Polymer ist ein Schichtaufbau gewährleistet, der eine weitere Extrusionsbeschichtung auf der Siegelseite der Folie überflüssig macht.

Die Rollneigung und die optischen Eigenschaften der erfindungsgemäßen Folie werden dadurch verbessert, dass eine zweite Schicht aus einem Aluminiumwerkstoff vorgesehen ist und die zweite Schicht als Aluminiumfolie ausgebildet ist. Aufgrund der Symmetrie dieses Folienaufbaus zeigt eine derartige Folie praktisch keine Rollneigung. Darüber hinaus kann der optische Eindruck dadurch verbessert werden, dass wahlweise das durch das Doppeltwalzen der verwendeten Aluminiumfolien bedingte Vorhandensein einer Glanz- und einer Mattseite dazu genutzt wird, die Optik der erfindungsgemäßen Folie anzupassen. Das Erscheinungsbild der gedoppelten Folie weicht optisch und haptisch kaum von denen einschichtiger dünner Aluminiumfolien ab. Darüber hinaus besteht ein wesentlicher Vorteil darin, dass man dünne Folien mit relativ hoher Porenanzahl gegeneinander kaschieren kann, ohne dass die Porigkeit im Verbund zum Tragen kommt, da - statistisch gesehen - die Wirkungsbereiche von Poren in beiden Folien selten genau übereinander liegen bzw. sich überlappen, so dass insgesamt eine durchlässige Stelle mit hoher Wahrscheinlichkeit vermieden werden kann. Darüber hinaus stellt die Schicht aus dem reißfestem Polymer eine gute Barriere für Sauerstoff und Wasserdampf dar.

Vorteilhafterweise weisen die Aluminiumfolien bei der soeben beschriebenen Ausgestaltung der erfindungsgemäßen Folie eine Dicke von etwa 5 bis 20 µm auf, wodurch eine erhebliche Materialersparnis und damit eine Kostenreduzierung gewährleistet ist.

Um eine sichere Verbindung zwischen der extrusionskaschierten Schicht aus einem reißfesten Polymer und der Schicht aus einem Aluminiumwerkstoff zu gewährleisten, ist gemäß einer Ausgestaltung der Erfindung mindestens eine mit der Schicht aus reißfestem Polymer coextrudierte Haftvermittlungsschicht zwischen der Schicht aus einem Aluminiumwerkstoff und der Schicht aus reißfestem Polymer vorgesehen.

Da die Eigenschaften der erfindungsgemäßen Folie wesentlich von den Eigenschaften des reißfestem Polymers abhängen ist die Auswahl des reißfestem Polymers von besonderer Bedeutung. Vorzugsweise besteht die erfindungsgemäß vorgesehene Schicht aus reißfestem Polymer zumindest teilweise aus einem Polyamid, einem teilkristallinen, mikrokristallinen oder amorphen Polyamid, einem Polyester, einem kristallinen, teilkristallinen oder amorphen Polyester, Polypropylen, einem High-Density-Polyethylen, einem Olefincopolymer oder Ionomer, einem Cycloolefincopolymer, einem flüssigkristallinen oder kettensteifen Polymer, Polymerblends oder einem verstärkten Polymer.

Die Verwendung von flüssigkristallinen Polymeren ist von Vorteil, wenn ein gezielt einstellbares Einreißverhalten gewünscht ist. Dies resultiert daraus, dass insbesondere flüssigkristalline Polymere nur in einer Richtung eine hohe Reißfestigkeit aufweisen. Die Orientierung dieser reißfesten Richtung relativ zur zu erwartenden mechanischen Belastung kann zu gewünschten Effekten, wie beispielsweise einem reproduzierbaren Einreißbild führen.

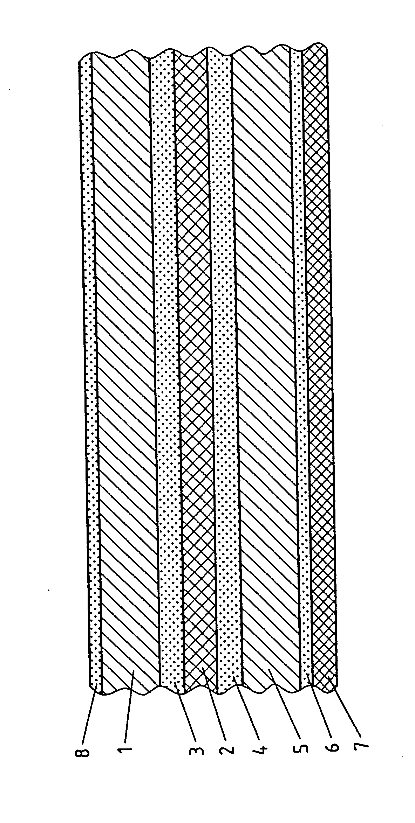

Es gibt nun eine Vielzahl von Möglichkeiten, die erfindungsgemäße Folie auszugestalten und weiterzubilden. Hierzu wird beispielsweise verwiesen einerseits auf die dem Patentanspruch 1 nachgeordneten Patentansprüche andererseits auf die Beschreibung eines Ausführungsbeispiels in Verbindung mit der Zeichnung.

In der Zeichnung zeigt die einzige Figur den Schichtaufbau eines Ausführungsbeispiels einer erfindungsgemäßen Folie für Lebensmittelverpackungen.

Erfindungsgemäß weist das in der einzigen Figur dargestellte Ausführungsbeispiel einer Folie für Lebensmittelverpackungen eine Schicht 1 aus einem Aluminiumwerkstoff auf, wobei diese Schicht 1 bei dem dargestellten Ausführungsbeispiel als etwa 7 µm dicke Aluminiumfolie ausgebildet ist. Erfindungsgemäß weist die Folie weiter eine extrudierte Schicht 2 aus einem reißfesten Polymer auf. Die Schicht 2 aus reißfestem Polymer ist mit der Schicht 1 aus einem Aluminiumwerkstoff über eine mit der Schicht 2 aus reißfestem Polymer coextrudierte Haftvermittlerschicht 3 verbunden. Als Polymere für die Schicht 2 aus reißfestem Polymer können beispielsweise Polyamid-6 (z. B. EMS, BASF, PA-66, DuPont, amorphe Polyamide), Polyester, amorphe Polyester (z. B. von Eastman), Polypropylen, HDPE und zur Einstellung steiferer Mittelschichten auch Cycloolefincopolymere wie COC Topas, flüssigkristalline Polymere (LCP) wie z. B. Xydar oder Vectra, Polymerblends oder verstärkte Polymere eingesetzt werden.

Als Haftvermittlerschicht 3 eignen sich modifizierte Polymere wie modifiziertes Polyethylen oder modifiziertes Polypropylen.

Die Schicht 2 aus reißfestem Polymer ist über eine zweite Haftvermittlerschicht 4, die ebenfalls vorzugsweise gemeinsam mit der Schicht 2 aus reißfestem Polymer und der ersten Haftvermittlerschicht 3 coextrudiert wird mit einer zweiten Schicht 5 aus einem Aluminiumwerkstoff verbunden. Durch den damit gewährleisteten symmetrischen Aufbau der erfindungsgemäßen Folie wird eine Rollneigung der Folie vermieden.

Lediglich der Vollständigkeit halber ist in der einzigen Figur weiter dargestellt, dass die zweite Schicht 5 aus einem Aluminiumwerkstoff an ihrer Unterseite über einen Primer 6 mit einer siegelfähigen Schicht 7 versehen ist, während die Oberseite der ersten Schicht 1 aus einem Aluminiumwerkstoff mit einer Farbschicht 8 als Ergebnis eines Druckvorgangs versehen ist.

Das in der einzigen Figur dargestellte Ausführungsbeispiel einer erfindungsgemäßen Folie für Lebensmittelverpackungen bleibt bei geeigneter Wahl des Schmelzbereiches der Schicht 2 aus reißfestem Polymer auch beim Siegeln der Folie dimensionsstabil. Es tritt also lediglich eine geringe Schichtdickenminderung der Schicht 2 aus einem reißfesten Polymer beim Heißsiegeln auf.

Ist eine gute Entfernung von Walzölrückständen durch Flammbehandlung oder Korona-Behandlung In-line unmittelbar vor der Extrusionskaschierung möglich, so können auch walzharte Aluminiumfolien gegeneinander kaschiert werden.

Ein typischer Dickenaufbau sieht eine erste Haftvermittlerschicht 3 mit einer Dicke von 3 µm, eine Schicht 2 aus reißfestem Polymer mit einer Dicke von 4 µm und einer zweiten Haftvermittlerschicht 4 mit einer Dicke von wiederum 3 µm vor. Je nach Ansprüchen an die mechanischen Eigenschaften können die Schichtdicken auch höher oder, abhängig von der Leistungsfähigkeit der Harze und der Extrusionstechnology, niedriger gewählt werden.

Mit Polypropylen basierenden oder besonders widerstandsfähigen Haftvermittlern kann für eine erfindungsgemäße Folie auch Pasteurisierbarkeit oder Sterilisationsbeständigkeit (z.B. bei 121 °C, 2bar) erreicht werden.

Die mechanischen Eigenschaften der Schicht 2 aus reißfestem Polymer und die Umformeigenschaften der Gesamtfolie können über die Auswahl des reißfestem Polymers variiert werden.

Die erfindungsgemäße Folie kann mit herkömmlichen Methoden bedruckt, lackiert, kaschiert oder beschichtet werden.

Das in der einzigen Figur dargestellte etwa 24 µm dicke Ausführungsbeispiel (7 µm AL/10 µm Coextrusionsschicht/7 µm AL) ist in Bezug auf die Herstellungskosten vergleichbar mit einem 30 µm AL-Band, bietet aber günstigere Verarbeitungs- und Gebrauchseigenschaften als das reine AL-Band.

Schließlich ist die erfindungsgemäße Folie auch fertigungstechnisch vorteilhaft herzustellen, da die Coextrusionsbeschichtung mit sofortiger Haftung und Einstellung aller Verbundeigenschaften in einem Maschinendurchgang ohne Abwarten von Härtungszeiten durchgeführt werden kann.

## Patentansprüche

1. Folie für Lebensmittelverpackungen mit mindestens einer Schicht (1) aus einem Aluminiumwerkstoff,
**dadurch gekennzeichnet, dass** die Folie mindestens eine extrudierte Schicht (2) aus einem reißfesten Polymer aufweist.

2. Folie nach Anspruch 1,
**dadurch gekennzeichnet, dass** die Schicht (1) aus einem Aluminiumwerkstoff als Aluminiumfolie ausgebildet ist.

3. Folie nach Anspruch 1,
**dadurch gekennzeichnet, dass** die Schicht (1) aus einem Aluminiumwerkstoff als auf eine Kunststofffolie aufgedampfte Aluminiumschicht ausgebildet ist.

4. Folie nach einem der Ansprüche 1 bis 3,
**dadurch gekennzeichnet, dass** eine mit der Schicht (2) aus reißfestem Polymer coextrudierte siegelfähige Schicht (7) vorgesehen ist.

5. Folie nach einem der Ansprüche 1 bis 3,
**dadurch gekennzeichnet, dass** eine zweite Schicht (5) aus einem Aluminiumwerkstoff vorgesehen ist und zumindest die zweite Schicht (5) als Aluminiumfolie ausgebildet ist.

6. Folie nach Anspruch 5,
**dadurch gekennzeichnet, dass** die Aluminiumfolie eine Dicke von 5 bis 20 µm aufweist.

7. Folie nach einem der Ansprüche 1 bis 6,
**dadurch gekennzeichnet, dass** mindestens eine mit der Schicht (2) aus reißfestem Polymer coextrudierte Haftvermittlerschicht (3, 4) zwischen der Schicht (1, 5) aus einem Aluminiumwerkstoff und der Schicht (2) aus reißfestem Polymer vorgesehen ist.

8. Folie nach einem der Ansprüche 1 bis 7,
**dadurch gekennzeichnet, dass** die Schicht (2) aus reißfestem Polymer zumindest teilweise aus einem Polyamid, einem teilkristallinen, mikrokristallinen oder amorphen Polyamid, einem Polyester, einem kristallinen, teilkristallinen oder amorphen Polyester, Polypropylen, einem High-Density-Polyethylen, einem Olefincopolymer oder Ionomer, einem Cycloolefincopolymer, einem flüssigkristallinen oder kettensteifen Polymer, Polymerblends oder einem verstärkten Polymer besteht.
